(19) Europäisches Patentamt
European Patent Office
Office européen des brevets

(11) Veröffentlichungsnummer: **0 503 435 A1**

(12) # EUROPÄISCHE PATENTANMELDUNG

(21) Anmeldenummer: **92103587.9**

(51) Int. Cl.$^5$: **C08G 75/02**

(22) Anmeldetag: **02.03.92**

(30) Priorität: **13.03.91 DE 4108033**

(43) Veröffentlichungstag der Anmeldung:
**16.09.92 Patentblatt 92/38**

(84) Benannte Vertragsstaaten:
**BE DE FR GB IT**

(71) Anmelder: **BAYER AG**

**W-5090 Leverkusen 1 Bayerwerk(DE)**

(72) Erfinder: **Schmidt, Manfred, Dr.**
**Erich-Klausener-Strasse 37**
**W-4150 Krefeld(DE)**
Erfinder: **Denecker, Gabriel, Dr.**
**Vinkenlaan 18**
**B-2180 Kalmthout(BE)**
Erfinder: **Jakob, Wolfgang, Dipl.-Ing.**
**Am Domacker 81**
**W-4130 Moers(DE)**
Erfinder: **Arlt, Wolfgang, Dr.**
**Schönwasserstrasse 230C**
**W-4150 Krefeld(DE)**

(54) **Verfahren zur Molekulargewichts-Stabilisierung von linearen oder gegebenenfalls verzweigten Polyarylensulfiden.**

(57) Die Erfindung betrifft ein Verfahren zur Molekulargewichtsstabilisierung von hochmolekularen, gegebenenfalls verzweigten Polyarylensulfiden, hergestellt durch Umsetzung von Dihalogenaromaten und gegebenenfalls Tri- oder Tetrahalogenaromaten und gegebenenfalls polymerkettenabbrechenden Monomeren mit Alkalisulfiden - und/oder Alkalihydrogensulfiden in aprotischen polaren Lösungsmitteln bei erhöhter Temperatur, dadurch gekennzeichnet, daß nach Erreichen des gewünschten Molekulargewichtes im Überschuß vorhandene Alkalisulfide und/oder Alkalihydrogensulfide durch Umsetzung mit Säuren unter Bildung der Alkalisalze dieser Säuren und Schwefelwasserstoff zumindest partiell umgesetzt werden.

EP 0 503 435 A1

Die Erfindung betrifft ein Verfahren zur Molekulargewichtsstabilisierung von hochmolekularen, gegebenenfalls verzweigten Polyarylensulfiden, hergestellt durch Umsetzung von Dihalogenaromaten und gegebenenfalls Tri- oder Tetrahalogenaromaten und gegebenenfalls polymerkettenabbrechenden Monomeren mit Alkalisulfiden - und/oder Alkalihydrogensulfiden in aprotischen polaren Lösungsmitteln bei erhöhter Temperatur, dadurch gekennzeichnet, daß nach Erreichen des gewünschten Molekulargewichtes im Überschuß vorhandene Alkalisulfide und/oder Alkalihydrogensulfide durch Umsetzung mit Säuren unter Bildung der Alkalisalze dieser Säuren und Schwefelwasserstoff zumindest partiell umgesetzt werden.

Polyarylensulfide (PAS) und ihre Herstellung sind bekannt (z.B. US-A 3 354 129, EP-A 171 021, 0 215 259, 0 142 024, DE-A 3 839 441, DE-A 2 623 362).

PAS sind hochtemperaturbeständige Kunststoffe. Sie werden vorzugsweise auf dem Elektro-/Elektronik-Sektor sowie im Fahrzeug- und Flugzeugbau eingesetzt. Derartige Anwendungen stellen hohe Anforderungen an die Reinheit und Beständigkeit und damit an die Molekulargewichtseinheitlichkeit eines Kunststoffs.

Die unter Abspaltung von Alkalihalogeniden aus Dihalogenaromaten und Alkalisulfiden gebildeten Polyarylensulfide können bei erhöhter Temperatur mit im Überschuß vorhandenen Alkalisulfiden unter Polymerkettenspaltung reagieren, wobei ein unerwünschter Molekulargewichtsabbau resultiert (z.B. N. N. Woroschzow et. al., C. R. Acad. Sci. URSS Ser. A, 1933, S. 291-95, Leningrad, Inst. für Hochdruck). Dies kann zu Polyarylensulfiden mit niedrigem Molekulargewicht führen, die relativ hohe Schmelzflußwerte besitzen. DE-A 2 632 362 beschreibt ein Verfahren, wobei Polyarylensulfide in N-Methylpyrrolidon unter Zugabe großer Mengen von Polymerisationhilfsmitteln wie Lithiumhalogeniden oder Alkalicarboxylaten hergestellt werden, und wobei während der Bildung des Polymeren oder nach der Bildung des Polymeren dem Reaktionsgemisch Kohlendioxid zugegeben wird. Nach diesem Verfahren erhält man Polymere mit hohen Schmelzflußwerten. Ziel dieses Verfahrens des DE-A 2 623 362 ist es, bewußt Polyarylensulfide mit niedrigen Molekulargewichten, d. h. hohen Schmelzflußwerten zu erhalten.

Ziel des vorliegenden erfidungsgemäßen Verfahrens ist es, Polyarylensulfide eines definierten Molekulargewichtes herzustellen und dieses in der Reaktionsmischung so zu stabilisieren, daß über einen längeren Zeitraum, der zur Aufarbeitung eines technischen Ansatzes von mehreren Tonnen Gesamtgewicht erforderlich ist, ein Molekulargewichtsabbau nicht erfolgt und Polyarylensulfide einer bestimmten Molekulargewichtseinheitlichkeit erhalten werden.

Gegenstand der Erfindung ist ein Verfahren zur Molekulargewichts-Stabilisierung von linearen oder gegebenenfalls verzweigten, Polyarylensulfiden, vorzugsweise Polyphenylensulfiden, hergestellt durch Umsetzung von

a) einen oder mehreren Dihalogen(hetero)aromaten der Formel (I) und/oder (II),

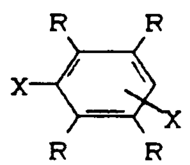 (I), 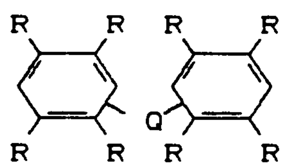 (II),

in denen

X für Halogen wie Chlor oder Brom steht,

R gleich oder verschieden sind und Wasserstoff, $C_1$-$C_{20}$-Alkyl, $C_{4-20}$-Cycloalkyl, $C_6$-$C_{24}$-Aryl, $C_7$-$C_{24}$-Alkylaryl und $C_7$-$C_{24}$-Arylalkyl sein können, wobei zwei zueinander ortho-ständige Reste R zu einem aromatischen oder heterocyclischen Ring mit bis zu drei Heteroatomen wie N,O oder S verknüpft sein können,

und

Q für eine chemische Bindung, für zweibindige Gruppen wie -Ar-, -O-, -S-, -SO-, $-SO_2-$, $-(CR_2)_m-$, -CO-, -CO-Ar-CO-, -CO-NH-, -CO-NH-Ar-NH-CO- steht,
wobei R die oben angegebene Bedeutung hat, Ar einen zweibindigen $C_6$-$C_{24}$-Aromaten bedeutet, m eine ganze Zahl von 1 bis 24 ist

und

b) 0 bis 5 Mol.-%, bevorzugt 0 bis 1,25.-%, bezogen auf die Summe der Dihalogenaromaten der Formel (I) und/oder (II), eines Tri- oder Tetrahalogenaromaten der Formel (III),

$ArX_n$ (III),

in welcher

Ar ein aromatischer oder heterocyclischer Rest mit 6 bis 24 Ringatomen ist, wobei bis zu drei Ring-C-Atomen durch Heteroatome wie N, O, S ersetzt sein können,

X für Halogen wie Brom oder Chlor steht und

n für die Zahlen 3 oder 4 steht,

sowie 0 bis 3 Mol %, bevorzugt 0 bis 1 Mol % bezogen auf die Summe der Dihalogenaromaten der Formel (I) und/oder (II), Monohalogenaromaten der Formel (IV),

R-Ar-X (IV),

worin

X für Halogen wie Brom oder Chlor steht, Ar die bei Formel (III) angegebene Bedeutung hat,

R die bei Formel (I) angegebene hat

und

c) 50 bis 100 Mol % Alkalisulfid wie Natrium- oder Kaliumsulfid und 0 bis 50 Mol % Alkalihydrogensulfid wie Natrium- oder Kaliumhydrogensulfid, wobei das molare Verhältnis von (a + b): c im Bereich von 0,75 : 1 bis 1,15 : 1, vorzugsweise 0,90:1 bis 1,1:1 liegt,

d) in einem aprotischen, polaren, organischen Lösungsmittel, jedoch nicht N-Methylpyrrolidon, gegebenenfalls unter Mitverwendung von Cosolventien, wobei das molare Verhältnis von c) zu dem organischen Lösungsmittel d) im Bereich von 1 : 3,4 bis 1 : 1,0, vorzugsweise im Bereich von 1 : 2,6 bis 1 : 1,3 liegt, dadurch gekennzeichnet, daß die Umsetzung durch Vermischen von wasserhaltigem Alkalisulfid und/oder Alkalihydrogensulfid-Lösungen mit Lösungen der Dihalogenaromaten in einem organischen Lösungsmittel bei Temperaturen oberhalb 212°C erfolgt, der Wassergehalt der Reaktionslösung 0,02 Gew.-% nicht überschreitet und nicht umgesetzte Halogenaromaten der Formeln (I), (II) und (III) kontinuierlich oder zum Ende der Reaktion aus dem Reaktionsgemisch entfernt werden, die wasserhaltigen Alkalisulfid-und/oder Alkalihydrogensulfidschmelzen gegebenenfalls gemeinsam mit 0 bis 3 Mol (bezogen auf die Summe der Dihalogenaromaten der Formel (I) und/oder (II) kettenabbrechenden Monhydroxyaromaten der Formel (I),

$HO-Ar-R_2$ (V),

wobei

Ar die bei Formel (III) angegebene Bedeutung hat, $R_2$ = H oder ein $C_1$-$C_8$-Alkylrest oder ein $C_6H_5$-Arylrest, $-S-C_6H_5$, $-SO_2-C_6H_5$ oder

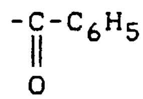

sein kann

und

wobei die wasserhaltige Alkalisulfid- und/oder Alkalihydrogensulfidschmelze über eine beheizte Leitung, bevorzugt jedoch über eine beheizte Düse in das Reaktionsgemisch zugegeben werden, dadurch gekennzeichnet, daß man nach Erreichen des gewünschten Molekulargewichtes des Polyarylensulfids in dem Reaktionsgemisch eine der Restmenge an nicht umgesetzten Alkalisulfid und/oder Alkalihydrogensulfid zu 5 bis 95 % äquivalente Menge einer Säure oder eines Säureanhydrids zugibt, und anschließend das Reaktionsgemisch kontinuierlich oder diskontinuierlich aufarbeitet.

Beispiele für erfindungsgemäß einsetzbare Dihalogenaromaten der Formel (I) sind 1,4-Dichlorbenzol, 1,4-Dibrombenzol, 1-Brom-4-chlorbenzol, 1,3-Dichlorbenzol, 1,3-Dibrombenzol, 1-Brom-3-chlorbenzol, 2,5-Dichlortoluol, 2,5-Dichlorxylol, 1,4-Dichlor-2-ethylbenzol, 1,4-Dibrom-2-ethylbenzol, 1,4-Dichlor-2,3,5,6-tetramethylbenzol, 1,4-Dichlor-2-cyclohexylbenzol, 2-Benzyl-1,4-dichlorbenzol, 2,4-Dichlortoluol, 2,4-Dichlorxylol, 2,4-Dichlorcumol, vorzugsweise 1,4-Dichlorbenzol, 1,3-Dichlorbenzol und 2,5-Dichlortoluol.

Beispiele für erfindungsgemäße Dihalogenaromaten der Formel (II) sind 4,4-Dichlordiphenyl, 4,4'-Dibromdiphenyl, 4,4'-Dichlorbenzophenon, 3,3'-Dichlorbenzophenon, 4,4'-Dichlordiphenylsulfon, 1,4-Bis-(4'-chlorbenzoyl)benzol, vorzugsweise 4,4'-Dichlordiphenyl, 4,4'-Dichlordiphenylsulfon und 4,4'-Dichlorbenzophenon.

Die Dihalogenaromaten der Formel (I) und/oder (II) sind allein oder im Gemisch miteinander einsetzbar.

Beispiele für erfindungsgemäß einsetzbare Tri-oder Tetrahalogenaromaten der Formel (III) sind 1,2,4-Trichlobenzol, 1,3,5-Trichlorbenzol, 2,2',4,4'-Tetrachlordiphenyl, 2,2',4,4'-Tetrachlordiphenylsulfid, 1,3,5-Trichlortriazin, 1,2,6-Trichlornaphthalin und Tris(4-chlorphenyl)benzol.

Beispiel für erfindungsgemäß einsetzbare kettenabbrechende Monohalogenaromaten der Formel (IV) sind 4-Chlordiphenylsulfid, 4-Chlordiphenyl, 4-Chlordiphenylketon, 4-Chlordiphenylsulfon.

Beispiele für kettenabbrechendeMonohydroxyaromaten der Formel (V)

$HO-Ar-R_2$ (V),

wobei

Ar die Bedeutung der Formel (III) hat, $R_2$ = H oder ein $C_1$-$C_8$-Alkylrest oder ein $C_6H_5$-Arylrest, -S-$C_6H_5$, -$SO_2$-$C_6H_5$ oder

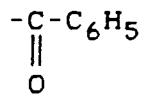

sein kann,

die gemeinsam mit der Alkalisulfid-/hydrogensulfidschmelze dosiert werden können, sind Phenol, 4-Hydroxydiphenyl, 4-Hydroxydiphenylsulfid.

Die Alkalisulfide werden in üblichen Mengen und in üblicher Weise eingesetzt. Es können z.B. Natrium- und Kaliumsulfide eingesetzt werden, die aus den Hydrogensulfiden mit Natrium- oder Kaliumhydroxid hergestellt werden. Sie enthalten 1 bis 9 Mol Wasser pro Mol Sulfid und werden als Schmelze eingesetzt.

Als Hydrogensulfide sind Natrium- oder Kaliumhydrogensulfide geeignet. Sie können aus Hydroxiden und Schwefelwasserstoff hergestellt werden. Ebenso ist es möglich, sie aus Sulfiden mit Schwefelwasserstoff herzustellen. Sie können 1 bis 4 Mol Wasser enthalten.

Erfindungsgemäß geeignete organische Lösungsmittel sind aprotische Lösungsmittel, insbesondere N-alkylierte Lactame, beispielsweise N-Ethylpyrrolidon, N-Methylpiperidon, N-Isopropyl-pyrrolidon, n-Methylcarprolactam, disubstituierte cyclische Harnstoffe, beispielsweise N,N-Dimethylpyrimidazolidinon (auch N,N-Dimethylpropylenharnstoff genannt), N,N'-Dimethylimidazolidinon. Der Siedepunkt der Lösungsmittel liegt bei 212$^0$C bis 280$^0$C, vorzugsweise 212$^0$C bis 242$^0$C. Zur Erreichung des Temperaturbereiches kann die Reaktion unter leichtem Überdruck (bis zu $10^3$ mbar) durchgeführt werden.

Als Cosolventien können beispielsweise N-Alkylcarbonsäuren oder N,N-Dialkylcarbonsäuremide von $C_1$-$C_8$-aliphatischen und $C_6$-$C_{12}$-aromatischen Carbonsäuren in einer Menge von 0,02 bis 18 Mol.-%, bezogen auf Sulfid, eingesetzt werden, Vorzugsweise können N,N-Dimethylacetamid, N,N-Diethylacetamid, N,N-Dimethylpropionamid oder N-Alkylamino-carbonsäuren wie beispielsweise N-Methylaminocapronsäure eingesetzt werden.

Erfindungsgemäß einsetzbare Säuren oder Säureanhydride sind beispielsweise Phosphorsäure, Schwefelsäure, Salzsäure, Essigsäure, Adipinsäure, phosphorige Säure oder schweflige Säure, Erfindungsgemäß einsetzbare Säureanhydride sind beispielsweise Acetanhydrid, Schwefeldioxid, Besonders bevorzugt werden Phosphorsäure, Schwefelsäure und Salzsäure und Essigsäure.

Schwefeldioxid kann gegebenenfalls mit Wasserdampf gesättigt mit einer Temperatur von 5 bis 150$^0$C und einem Wasserdampfpartialdruck von 5 bis 100 mbar eingesetzt werden.

Bei der erfindungsgemäß bevorzugten Durchführung des Verfahrens wird das Lösungsmittel, die Halogenaromaten der Formel (I) und (II) und/oder (III) und (IV) gegebenenfalls mit den Cosolventien im Reaktor vorgelegt und die wasserhaltigen Hydrogensulfide und/oder Sulfide gegebenenfalls in Mischung mit 0-3 Mol.-% (bezogen auf die Summe der Dihalogenaromaten der Formel (I) und/oder (II)) kettenabbrechenden Monohydroxyaromaten wie beispielsweise Phenol gleichzeitig oder nacheinander der Reaktionsmischung über eine beheizte Leitung, die gegebenenfalls mit einer beheizten Düse versehen ist, zugeführt, Hierbei ist die Temperatur des Reaktionsgemisches größer als 200$^0$C. Die Entwässerung erfolgt spontan unter Rückführung der azeotrop abdestillierenden Halogenaromaten der Formeln (I), (II), (III). Der Wassergehalt des Reaktionsgemisches beträgt 0 bis 0,02 Gew.-%.

Die Reaktionszeit kann variieren von weniger als einer Stunde bis zu 35 Stunden. Besonders bevorzugt kann sie 2 bis 25 Stunden betragen. Nicht umgesetzte Halogenaromaten der Formeln (I), (II), (III) und (IV) werden aus dem Reaktionsgemisch beispielsweise destillativ abgetrennt.

Zur Durchführung des erfindungsgemäßen Verfahrens werden nach Erreichen des gewünschten Molekulargewichts im Reaktionsgemisch (z.B. an einer entnommenen Probe ermittelt oder mittels einer kontinuierlichen Viskositätsmeßsonde feststellbar), gegebenenfalls in Mischung mit dem aprotischen Lösungsmittel 5 bis 95 % der dem Restgehalt an Alkalisulfid und/oder Alkalihydrogensulfid im Reaktionsgemisch äquivalenten Menge an Säure oder Säureanhydrid zugegeben. Die Zudosierung sollte so erfolgen, daß die Temperatur des Reaktionsgemisches nicht unter 200°C, bevorzugt nicht unter 220°C, absinkt. Das so stabilisierte Reaktionsgemisch kann ohne Reduzierung des Molekulargewichtes (d.h. bei gleichbleibender Viskosität des Reaktionsgemisches) über eine lange Zeit auf der erforderlichen hohen Temperatur von > 200°C gehalten werden, so daß eine kontinuierliche oder diskontinuierliche Aufarbeitung ohne drastischen Molekulargewichtsabbau ermöglicht wird.

Die Isolierung der Polyarylensulfide erfolgt beispielsweise durch Abkühlen, Filtern und Waschen des Reaktionsgemisches zunächst mit Ketonen wie Aceton oder Alkoholen wie Methanol, Ethanol oder Isopropanol. Der verbleibende Rückstand wird in Wasser im Verhältnis 1 Teil Rückstand zu 5 bis 20 Teilen Wasser suspendiert, die erhaltene Suspension mit Säuren wie beispielsweise Essigsäure, Salzsäure, Phosphorsäure, Schwefelsäure auf pH = 1 bis 7 gestellt und anschließend mit Wasser gewaschen. Diese Verfahrensschritte werden vorzugsweise kontinuierlich durchgeführt.

Ein weiterer Vorteil des erfindungsgemäßen Verfahrens in der sich anschließenden Polymeraufarbeitung ist der deutlich reduzierte Mengenanfall an Schwefelwasserstoff in der Ansäuerungsphase der Polymeraufarbeitung, wodurch die nachfolgende Wasser-Wäsche des Polymers erleichtert wird.

Die so hergestellten Polyarylensulfide besitzen eine enge Molekulargewichtsverteilung. Dieser Vorteil wird insbesonders bei großtechnischen diskontinuierlichen Ansätzen mit mehreren Tonnen Polymerausbeute bemerkbar, deren Verweilzeit im Reaktor während der Aufarbeitungsphase mehrere Stunden betragen kann. Bei technisch verursachten Unterbrechungen können es auch mehrere Tage sein.

Die so hergestellten PAS enthalten weniger als 5 ppm anorganisches Chlor. Eine sonst übliche oxidative thermische Nachbehandlung und zusätzliche Reinigung durch Extraktionsmethoden kann entfallen.

Die Bestimmung der Schmelzviskositäten der erfindungsgemäß hergestellten Polyarylensulfide als Maß für das Molekulargewicht erfolgt bei 310°C in einem Hochdruckkapillarviskosimeternach DIN 54 811. Es wird der Schmelzviskositätswert bei $\tau$ = 1000 $sec^{-1}$ als Vergleichswert gewählt (vgl. Tabelle 1).

Die Bestimmung der Molegewichtsverteilung erfolgt z.B. durch Hochtemperatur-Gelpermeationschromatographie einer 0,05 gew.-%igen Lösung des Polyarylensulfids in N-Methylcarprolactam bei 185°C an Silicagelsäulen.

Die Uneinheitlichkeit U, eines Polymers ist definiert als die Differenz zwischen dem Quotienten aus Gewichtsmittelmolekulargewicht $M_w$ und Zahlenmittelmolekulargewicht $M_n$ und der Zahl 1.

$$U_1 = \frac{M_w}{M_n} - 1$$

Die Bestimmung der Gehalte an anorganischem Chlor in den Polyarylensulfiden erfolgt z.B. durch argentometrische Titration.

Die erfindungsgemäß hergestellten Polyarylensulfide können mit anderen anorganischen oder organischen Oligomeren oder Polymeren, mit Pigmenten und Füllstoffen, beispielsweise Ruß, Graphit, Metallpulver, Glaspulver, Quarzmehl, Glimmer, Glas-und Kohlenstoffasern oder Fasern aus anderen anorganischen oder organischen Stoffen, mit üblichen anorganischen Füllstoffen aus der Reihe der Metalloxide oder Metallsulfate, mit anderen Zusatzstoffen, beispielsweise Stabilisatoren und/oder Entformungsmitteln versetzt werden.

Die erfindungsgemäß hergestellten Polyarylensulfide oder ihre Abmischungen können dierekt durch Extrusion, Extrusionsblasen, Spritzgießen oder sonst üblichen Verarbeitungstechniken zu Folien, Formkörpern oder Fasern verarbeitet werden. Diese können in üblicher Weise Verwendung finden, z.B. als Automobilteile, Armaturen, Ventile, Kugellagerteile, Elektroteile wie z.B. Schalter, elektonische Tafeln, chemikalienresistente und verwitterungsstabile Teile und Apparatteile wie Pumpengehäuse und Pumpenflügelräder, Ätzbadschalen, Dichtungsringe, Teile von Büromaschinen, Fernmeldeeinrichtungen, Haushaltsgeräten usw..

Vorzugsweise werden die nach dem erfindungsgemäßen Verfahren hergestellten Polymeren zur Ummantelung von elektronischen Bauteilen wie beispielsweise Transistoren, Dioden und Mikrochips verwendet.

## Beispiele

### Beispiel 1

In einen 5 $m^3$-Reaktor, der mit einer Sonde zur online-Messung der Reaktionsgemischviskosität versehen ist, werden unter Stickstoff 1920 kg (15,12 kMol) N-Methylcaprolactam (NMC) und 1199 kg (8,16 kMol) 1,4-Dichlorbenzol vorgelegt und auf 212°C erhitzt. Innerhalb von 6,0 Std. wird eine auf 130°C erhitzte Schmelze von 812,3 kg (6,154 kMol) Natriumsulfid-trihydrat, 235,7 kg (2,946 kMol) 30 % wasserhaltiges Natriumhydrogensulfid, 770 g (8,1 Mol) Phenol (= 0,05 Mol.-% bezogen auf 1,4-Dichlorbenzol) und 292 kg (16,22 kMol) Wasser unter Rühren und azeotroper Entwässerung des Reaktionsgemisches bei einer Reaktionsgemischtemperatur von 200°C - 220°C eindosiert.

Das zudosierte Gemisch besitzt einen Wassergehalt von 51,9 %. Das Molverhältnis von Mol Schwefelspender (6,154 + 2,946 = 9,1 kMol) zu Mol Lösungsmittel (15,12 kMol) ist 1 : 1,66. Das Molverhältnis von Molen Dichlorbenzol zu Molen Natriumsulfid und Natriumhydrogensulfid ist 1 : 1,1157. Das mit dem Wasser azeotrop abdestillierende 1,4-Dichlorbenzol wird kontinuierlich während der Sulfiddosierung in den Reaktor zurückgeführt, Anschließend wird 4 Std. unter Rückflußsieden erhitzt, wobei die Temperatur des Reaktionsgemisches auf 235°C ansteigt. Anschließend werden 70 kg NMC und 50 kg 1,4-Dichlorbenzol abdestilliert und die Reaktion weitere 4 Std. bei 238°C - 240°C unter Rühren und 0,1 bar Stickstoffüberdruck fortgeführt. Nachdem die Viskositätsmessung den gewünschten Wert während der letzten Stunde angezeigt hat, wird dem Reaktor eine Probe zur Analyse entnommen und anschließend 38,3 kg 75 %ige Phosphorsäure (= 293,4 Mol) im Gemisch mit 30 kg NMC innerhalb von 30 Min. eingetragen. Der $Na_2S$-Gehalt des Reaktionsgemisches vor der Säurezugabe betrug 0,77 Gew.-%, nach der Säurezugabe 0,154 Gew.-%.

In 2-stündigem Abstand werden Proben aus dem Reaktionsgemisch entnommen und bezüglich Molekulargewicht und Schmelzviskosität analysiert. Gleichzeitig werden die Viskositätswerte des Reaktionsgemisches notiert. Die Werte sind vergleichend in Tabelle 1 aufgelistet.

8 Stunden nach Zugabe der Säure wird der Ansatz wie folgt aufgearbeitet: Man entnimmt das Reaktionsgemisch dem Reaktor, läßt unter Stickstoffatmosphäre auf 70°C abkühlen, vermischt mit 1,4 Tonnen (to) Isopropanol unter Rühren, filtert Salz und Polymer ab, wäscht diese mit 0,6 to Isopropanol nach, suspendiert den Rückstand in 6 to Wasser, säuert die Suspension mit 78 %iger Schwefelsäure auf pH = 2,5 an; filtriert das Polymer ab, wäscht mit Wasser elektolytfrei und trocknet,
Ausb, 782 kg Polyphenylensulfid (= 94,7 % bezogen auf Dichlorbenzol).

Beispiel 2

Beispiel 1 wird wiederholt, jedoch werden anstelle von 75 %iger Phosphorsäure 17,83 kg $SO_2$ (= 278,6 Mol) mit einer Temperatur von 40°C und einem Wasserdampfpartialdruck von 60 mbar innerhalb von 2 Std. in das Reaktionsgemisch eindosiert, Die Reaktorinnentemperatur unterschreitet nicht 230°C. Der $Na_2S$-Gehalt des Reaktionsgemisches betrug vor der $SO_2$-Zugabe 0,65 Gew,-%, nach der $SO_2$-Zugabe 0,064 Gew`-%. Man arbeitet das Reaktionsgemisch wie in Beispiel 1 auf.
Ausb, 781 kg Polyphenylensulfid (= 94,6 % bez. auf Dichlorbenzol). Vergleichende Daten siehe Tabelle 1.

Vergleichsbeispiel 1

Beispiel 1 wird wiederholt, jedoch wird nach Erreichen des gewünschten Viskositätswertes im Reaktionsgemisch keine Säure oder $SO_2$ zudosiert. Man läßt 8,5 Std. weiter bei 235°C Innentemperatur und 0,1 bar Stickstoffüberdruck reagieren, entnimmt zu Analysenzwecken in 2-Stundenintervallen Proben aus dem Reaktionsgemisch, mißt den Viskositätsverlauf und arbeitet das Reaktionsgemisch wie in Beispiel 1 angegeben auf.
Ausb. 771 kg Polyphenylensulfid (= 93,4 % bez. auf Dichlorbenzol). Vergleichende Daten siehe Tabelle 1.

Tabelle 1

| Beispiel | Reaktor-Viskositätsanzeige η 8 Std. nach $Na_2S$-Dosierungsende (Maximum), vor Stabilisierung | Stabilisierung | Molgewicht $M_w$ 1) und Reaktorviskositätsanzeige η in zeitlichem Abstand nach Stabilisierung: nach: | 0 Std. | 2 Std. | 4 Std. | 6 Std. | 8 Std. | Schmelzviskosität η m des aufgearbeiteten Polymers, ηm-Messung gemäß DIN 5411, (vgl. S. 8) Hochdruckkapillarviskosimetrie 310°C |
|---|---|---|---|---|---|---|---|---|---|
| 1 | = 148 mPa.s | $H_3PO_4$ | $M_w$ = | 83400 | 83400 | 82100 | 82200 | 81800 | 280 Pa.s |
| | | | η = | 145 | 145 | 143 | 143 | 141 | |
| 2 | = 142 mPa.s | $SO_2$ | $M_w$ = | 81300 | 81700 | 82000 | 81600 | 80900 | 278 Pa.s |
| | | | η = | 143 | 144 | 144 | 142 | 140 | |
| Vergleichsbeispiel | = 149 mPa.s | - | $M_w$ = | 83600 | 78600 | 62100 | 49500 | 41400 | 74 Pa.s |
| | | | η = | 149 | 132 | 118 | 87 | 72 | |

1) Bestimmung nach HPGPC (vgl. S. 10)

## Patentansprüche

1. Verfahren zur Molekulargewichtsstabilisierung von linearen oder gegebenenfalls verzweigten Polyarylensulfiden, hergestellt durch Umsetzung von

a) einem oder mehreren Dihalogen(hetero)aromaten der Formeln (I) und/oder (II),

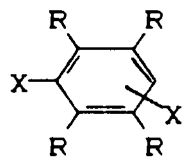 (I), 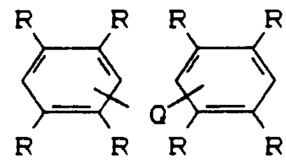 (II),

in denen

X für Halogen wie Chlor oder Brom steht,

R gleich oder verschieden sind und Wasserstoff, $C_1$-$C_{20}$-Alkyl, $C_4$-$C_{20}$-Cycloalkyl, $C_6$-$C_{24}$-Aryl, $C_7$-$C_{24}$-Alkylaryl und $C_7$-$C_{24}$-Arylalkyl sein können, wobei zwei zueinander orthoständige Reste R zu einem aromatischen oder heterocyclischen Ring mit bis zu drei Heteroatomen wie N,O oder S verknüpft sein können,

und

Q für eine chemische Bindung, für zweibindige Gruppen wie -Ar-, -O-, -S-, -SO-, $-(CR_2)m-$, -CO-, -CO-Ar-CO-, -CO-NH-, CO-NH-Ar-NH-CO-steht,
wobei R die oben angegebene Bedeutung hat, Ar einen zweibindigen $C_6$-$C_{24}$-Aromaten bedeutet, m eine ganze Zahl von 1 bis 24 ist

und

b) 0 bis 5 Mol.-%, bezogen auf die Summe der Dihalogenaromaten der Formel (I) und/oder (II), eines Tri- oder Tetrahalogenaromaten der Formel (III),

$ArX_n$ (III),

in welcher

Ar ein aromatischer oder heterocyclischer Rest mit 6 bis 24 Ringatomen ist, wobei bis zu drei Ring-C-Atome durch Heteroatome wie N, O, S ersetzt sein können,

X für Halogen wie Brom oder Chlor steht

und

n für die Zahlen 3 oder 4 steht,

sowie 0 bis 3 Mol %, bezogen auf die Summe der Dihalogenaromaten der Formel (I) und/oder (II), Monohalogenaromaten der Formel (IV),

R-Ar-X (IV),

worin

X für Halogen wie Brom oder Chlor steht, Ar die bei Formel (III) angegebene Bedeutung hat, R die bei Formel (I) angegebene Bedeutung hat

und

c) 50 bis 100 Mol % Alkalisulfiden wie Natrium- oder Kaliumsulfid und 0 bis 50 Mol % Alkalihydrogensulfid wie Natrium- oder Kaliumhydrogensulfid, wobei das molare Verhältnis von (a + b) : c im Bereich von 0,75 : 1 bis 1,15 : 1, vorzugsweise 0,90 : 1 bis 1,1 : 1 liegt,

d) in einem aprotischen, polaren, organischen Lösungsmittel, jedoch nicht N-Methylpyrrolidon, gegebenenfalls unter Mitverwendung von Cosolventien, wobei das molare Verhältnis von c) zu dem organischen Lösungsmittel d) im Bereich von 1 : 3,4 bis 1 : 1,0 liegt,

dadurch gekennzeichnet,

daß die Umsetzung durch Vermischen von wasserhaltigem Alkalisulfid und/oder Alkalihydrogensulfid-Lösungen mit Lösungen der Dihalogenaromaten in einem organischen Lösungsmittel bei Temperaturen oberhalb 212$^0$C erfolgt, der Wassergehalt der Reaktionslösung 0,02 Gew,-% nicht überschreitet und nicht umgesetzte Halogenaromaten der Formeln (I), (II) und (III) kontinuierlich oder zum Ende der Reaktion aus dem Reaktionsgemisch entfernt werden, die wasserhaltigen Alkalisulfid- und/oder Alkalihydrogensulfidschmelzen gegebenenfalls gemeinsam mit 0 bis 3 Mol % (bezogen auf die Summe der Dihalogenaromaten der Formel (I) und/oder (II)) kettenabbrechenden Monohydroxyaromaten der Formel (V)

HO-Ar-$R_2$ (V),

wobei

Ar die bei Formel (III) angegebene Bedeutung hat, $R_2$ = H oder ein $C_1$-$C_8$-Alkylrest oder ein $C_6H_5$-Arylrest, -S-$C_6H_5$, -$SO_2$-$C_6H_5$ oder

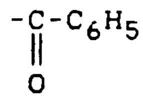

sein kann

und

wobei die wasserhaltige Alkalisulfid- und/oder Alkalihydrogensulfidschmelze über eine beheizte Leitung, bevorzugt jedoch über eine beheizte Düse in das Reaktionsgemisch zugegeben werden, dadurch gekennzeichnet, daß man nach Erreichen des gewünschten Molekulargewichtes des Polyarylensulfids in dem Reaktionsgemisch eine der Restmenge an nicht umgesetzten Alkalisulfid und/oder Alkalihydrogensulfid zu 5 bis 95 % äquivalente Menge einer Säure oder eines Säureanhydrids zugibt, und anschließend das Reaktionsgemisch kontinuierlich oder diskontinuierlich aufarbeitet.

**2.** Verfahren nach Anspruch 1, dadurch gekennzeichnet, daß als Säure Phosphorsäure eingesetzt wird,

**3.** Verfahren nach Anspruch 1, dadurch gekennzeichnet, das als Säureanhydrid Schwefeldioxid benutzt wird.

**4.** Verfahren nach Anspruch 1, dadurch gekennzeichnet, daß man ein mit Wasserdampf gesättigtes Schwefeldioxid einsetzt, das eine Temperatur von 5-150$^0$C und einen Wasserdampfpartialdruck von 5 bis 100 mbar besitzt.

**5.** Verfahren nach Anspruch 1, dadurch gekennzeichnet, daß als Säure Essigsäure und/oder Adipinsäure eingesetzt wird.

**6.** Verfahren nach Anspruch 1, dadurch gekennzeichnet, daß als Lösungsmittel N-Methylcaprolactam verwendet wird.

**7.** Verfahren nach Anspruch 1, dadurch gekennzeichnet, daß als Dihalogenaromaten der Formel (I) 1,4-Dichlorbenzol, 1,3-Dichlorbenzol und/oder 2,5-Dichlortoluol verwendet wird.

**8.** Verfahren nach Anspruch 1, dadurch gekennzeichnet, daß als Dihalogenaromaten der Formel (II) 4,4'-Dichlordiphenyl, 4,4'-Dichlordiphenylsulfon und/oder 4,4'-Dichlorbenzophenon verwendet wird.

Europäisches Patentamt

# EUROPÄISCHER RECHERCHENBERICHT

Nummer der Anmeldung: EP 92103587.9

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,A | DE - A - 2 623 362 (PHILLIPS PETROLEUM) * Seite 3, Zeilen 16-24; Ansprüche * -- | 1,7 | C 08 G 75/02 |
| A | EP - A - 0 229 626 (BAYER AG) * Ansprüche * -- | 1,6,7 | |
| A | US - A - 4 656 231 (TIESZEN et al.) * Beispiel 1; Spalte 5, Zeile 61 - Spalte 6, Zeile 15 * -- | 1,7 | |
| A | US - A - 4 920 201 (JAKOB et al.) * Beispiel 1 * ---- | 1,6,7 | |

RECHERCHIERTE SACHGEBIETE (Int Cl 5)

C 08 G 75/00

Der vorliegende Recherchenbericht wurde für alle Patentansprüche erstellt.

| Recherchenort | Abschlußdatum der Recherche | Prüfer |
|---|---|---|
| WIEN | 15-06-1992 | KÖRBER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument